# EUROPEAN PATENT SPECIFICATION

(11) **EP 1 028 561 B1**
(45) Date of publication and mention of the grant of the patent: **11.08.2004**
(21) Application number: 99301046.1
(22) Date of filing: 12.02.1999
(51) Int. Cl.: H04L 12/66, H04L 29/06

(54) **Device for data communications between wireless application protocol terminal and wireless application server, and method thereof**
Vorrichtung und Verfahren zur Datenkommunikation zwischen Drahtlosverarbeitungsprotokollsendstelle und Drahtlosverarbeitungsserver
Dispositif et procédé pour la communication de données entre un terminal de protocol d'application sans fil et un serveur d'application sans fil

(43) Date of publication of application: 16.08.2000
(73) Proprietor: SAMSUNG ELECTRONICS CO., LTD., Suwon-city, Kyungki-do 441-373 (KR)
(72) Inventor: Lee, Sang-seo, Seoul (KR); Kim, Yong-suk, Seoul (KR)
(74) Representative: Robinson, Ian Michael

(56) References cited:
- VARMA V K ET AL: "ARCHITECTURE FOR INTERWORKING DATA OVER PCS" IEEE COMMUNICATIONS MAGAZINE, vol. 34, no. 9, 1 September 1996 (1996-09-01), pages 124-130, XP000627245 ISSN: 0163-6804
- JAMES I: "WISE TM CONNECTS GSM TO THE INTERNET AND INTRANETS" ERICSSON REVIEW, no. SPEC. INT. ISS, 1 January 1998 (1998-01-01), pages 42-47, XP000751714
- WIRELESS APPLICATION FORUM: "Wireless Application Protocol Wireless Datagram Protocol Specification" WAP FORUM SPECIFICATIONS, [Online] 30 April 1998 (1998-04-30), XP002109607 Retrieved from the Internet: <URL:http://www.wapforum.org> [retrieved on 1999-07-16]
- ERLANDSON C ET AL: "WAP-the wireless application protocol" ERICSSON REVIEW, vol. 75, no. 4, 1998, pages 150-153 153, XP002101097
- SIETMANN R: "MOBIL INS INTERNET. WIRELESS APPLICATION PROTOCOL ADAPTIERT MOBILTELEFONE FUER DAS WWW" CT MAGAZIN FUER COMPUTER TECHNIK, no. 4, 1 January 1998 (1998-01-01), pages 202-207, XP000732823 ISSN: 0724-8679

## Description

The present invention relates to data communications, and more particularly, to a device for data communications between a Wireless Application Protocol (WAP) terminal and a WAP server, and a method thereof.

In general, a WAP server is connected between an Internet server which provides various information and a WAP terminal capable of receiving the information provided from the Internet server, to convert different data formats and different protocols between the Internet server and the WAP terminal. Also, the WAP server can provide the WAP terminal with its own information.

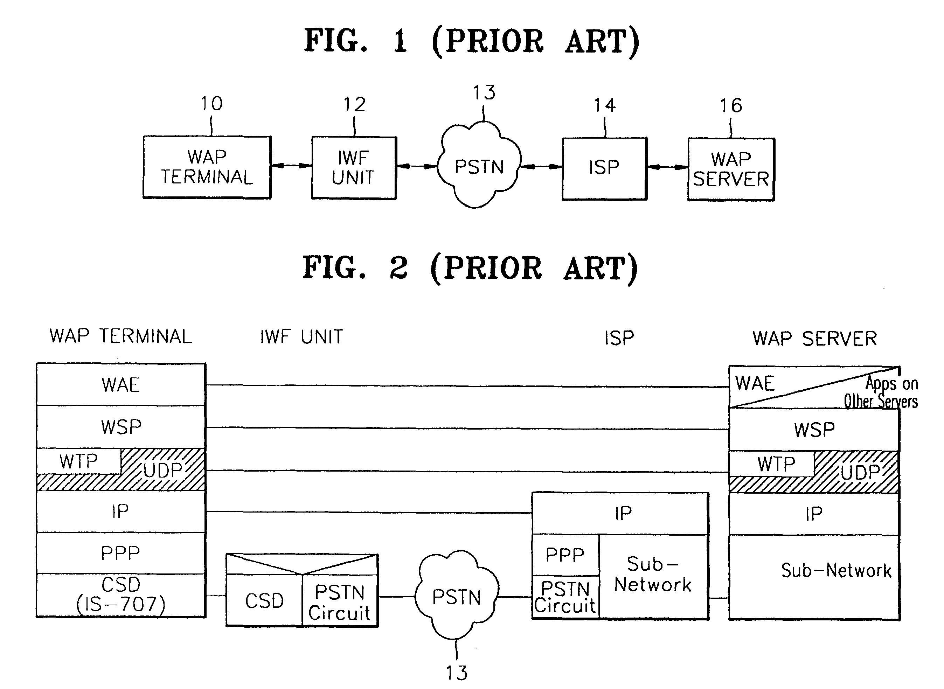

Figure 1 is a block diagram of a conventional data communications device between a WAP terminal and a WAP server.

The data communications device of Figure 1 comprises a WAP terminal 10, an interworking function (IWF) unit 12, a public switched telephone network (PSTN) 13, an Internet service provider (ISP) 14 and a WAP server 16.

The IWF unit 12 performs routing functions between the WAP terminal 10 and the ISP 14. The ISP 14 is one of companies providing general communication service such as HITEL or UNITEL. The WAP server 16 provides the WAP terminal 10 with its own information and much information from an Internet server (not shown).

Figure 2 shows a protocol stack of each block of the data communications device shown in Figure 1.

A protocol stack of the WAP terminal 10 consists of a plurality of protocol layers including a Circuit Switch Data services protocol (CSD(IS-707)), a Peer-to-Peer Protocol (PPP), an Internet Protocol (IP), a Wireless Transaction Protocol (WTP) and User Data Program Protocol (UDP), a Wireless Session Protocol (WSP) and a Wireless Application Environment protocol (WAE). Also, the CSD(IS707) includes an IS-95 protocol, a Radio Link Protocol (RLP), a PPP, an IP and a TCP. The protocol layers are well known to those skilled in the art, so explanation thereof will be omitted.

Such a protocol stack is disclosed in the "Wireless Application Protocol Wireless Datagram Protocol Specification", WAP Forum, 30 April 1998 (XP002109607).

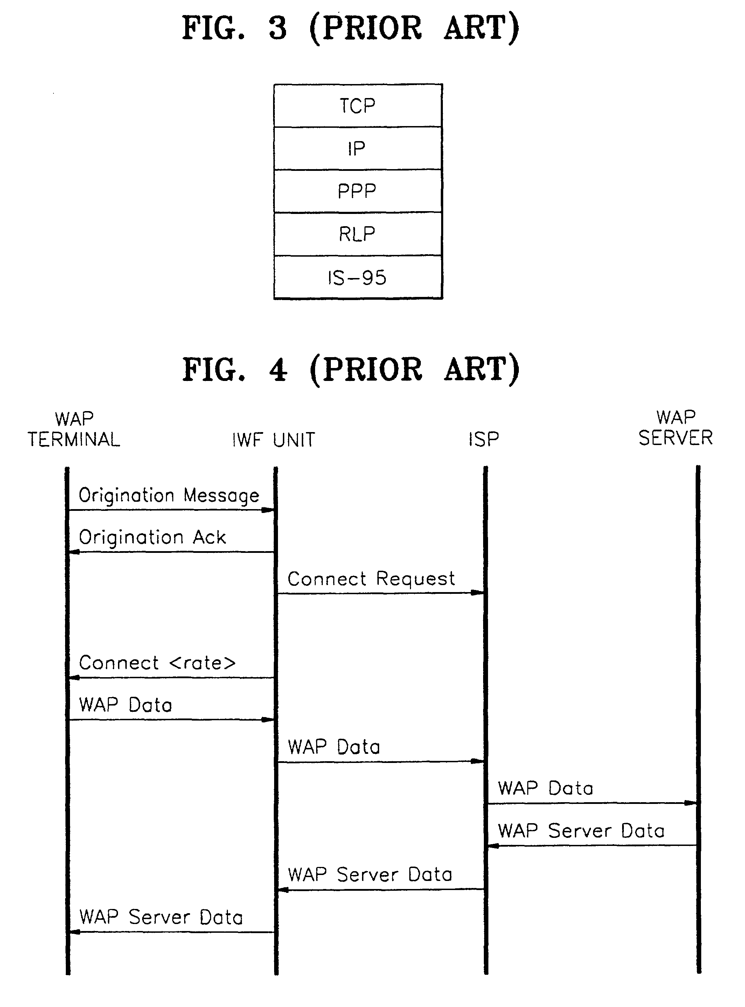

Figure 4 is a diagram illustrating data flow in the data communications device shown in Figure 1.

The operation of the data communications device of Figure 1 will be described with reference to Figure 4.

It is assumed that the WAP terminal 10 intends to receive Internet or electronic mail (E-mail) services. Here, the WAP terminal 10 is ready to receive a common call or data (Internet or E-mail) in a normal state. When a user of the WAP terminal 10 connects the WAP terminal 10 through the IWF unit 12 and the PSTN 13 to the ISP 14 using a telephone number for connection with the Internet, the ISP 14 connected to the WAP terminal 10 allows the user to receive the Internet or E-mail services. Also, when the user wants to stop receiving the Internet services, the ISP 14 disconnects the call from the WAP terminal 10, returning to the ready state.

In detail, the WAP terminal 10 sends an Origination Message requesting connection of its call to the IWF unit 12. The IWF unit 12 receives the Origination Message from the WAP terminal 10, and then sends an Origination Ack message acknowledging reception to the WAP terminal 10. The IWF unit 12 sends a Connect Request message for connection of a modem to the ISP 14. The ISP 14 receives the Connect Request message and sends a Connect <rate> message indicating the connection of the modem through the PSTN 13 and the IWF unit 12 to the WAP terminal 10. Under conditions that the WAP terminal 10 and the IWP unit 12 are connected to each other, the WAP terminal 10 sends WAP data (Internet or E-mail services request data) which the user wants to receive through the IWF 12 and the ISP 14, to the WAP server 16. After the WAP server 16 receives the WAP data, the WAP server 16 sends WAP server data which is retained in the WAP server itself, or data taken from an Internet server (not shown) through the ISP 14, the PSTN 13 and the IWP 12 to the WAP terminal 10.

The data communications device of Figure 1, having the protocol stack as shown in Figure 2, has the following problems.

First, because the CSD(IS-707) in the protocol stack of the WAP terminal 10 includes the IP/PPP as shown in Figure 3, the protocol stack of the WAP terminal 10 has IP/PPP protocol layers in duplicate. As a result, there is much overhead during transmission of data, so that transmission efficiency becomes low. That is, the resources of the terminal are not efficiently used. Also, when a user intends to connect to the WAP server 16 or the Internet, connection with the ISP 14 is achieved through the PSTN 14. Thus, the connection rate becomes slow down, and using the PSTN and the ISP 14 may be subject to charges by the telephone company or the ISP. Also, the transmission of data is inefficient because it requires multiple steps as shown in Figure 4.

With a view to solve or reduce the above problems it is a first aim of embodiments of the present invention to provide a device for data communications between a Wireless Application Protocol (WAP) protocol and a WAP server, adopting a protocol stack in which a single Internet Protocol/Peer-to-Peer Protocol (IP/PPP) layer included in a Circuit Switch Data services (ISD) protocol of the WAP terminal is used and an interworking function (IWF) unit also acts as an Internet service provider (ISP).

It is a second aim of embodiments of the present invention to provide a communication method of the data communications device for the first object.

It is a third aim of embodiments of the present invention to provide a device for data communications between a WAP terminal and WAP server, which performs data communications while performing switching between the WAP terminal and a non-WAP terminal.

It is a fourth aim of embodiments of the present invention to provide a communication method of the data communications device for the third aim.

According to a first aspect of the invention, there is provided a system for data communications between a Wireless Application Protocol (WAP) terminal and a WAP server, comprising: a plurality of WAP terminals each having a protocol stack in which a Circuit Switch Data service (CSD) protocol layer is laid under a Wireless Transaction Protocol (WTP) layer and a Wireless Datagram Protocol (WDP) layer, for generating WAP data which is service request data; a plurality of WAP servers each having a protocol stack in which a Transmission Control Protocol (TCP) layer and an Internet Protocol (IP) layer are laid under a WTP layer and a WDP layer, for providing the WAP terminals with WAP server data according to the WAP data; and an interworking function (IWF) unit having a CSD protocol layer connected to the CSD protocol layers of each WAP terminal, and a TCP layer and an IP layer which are connected to the TCP and IP layers of each WAP server, wherein each WAP terminal communicates with the IWF unit though a single Internet Protocol/Peer-to-Peer Protocol (IP/PPP) layer included in its own CSD protocol layer, and the IWF unit communicates through the Internet with each WAP server.

Preferably, the IWF unit includes a mapping table used for mapping each WAP terminal to the corresponding WAP server, wherein identification numbers of each WAP terminal and destination IP addresses of each WAP server are mapped to each other, or source IP addresses of each WAP terminal are mapped to the corresponding mapping table values.

The device may further comprise: a non-WAP terminal for generating a common circuit data; an Internet server for providing the non-WAP terminal with Internet server data according to the common circuit data; and an Internet service provider (ISP) having a public switched telephone network (PSTN) circuit layer, for transferring the common circuit data received through a PSTN from the non-WAP terminal, to the Internet server; and wherein the interworking function (IWF) unit is arranged for performing interfacing between each WAP terminal and each WAP server, and the non-WAP terminal and the ISP.

According to a second aspect of the invention, there is provided a communication method in a data communications system including a plurality of WAP terminals having a protocol stack in which a Circuit Switch Data service (CSD) protocol layer is laid under a Wireless Transaction Protocol (WTP) layer and a Wireless Datagram Protocol (WDP) layer, a plurality of WAP servers having a protocol stack in which a Transmission Control Protocol (TCP) layer and an Internet Protocol (IP) layer are laid under a WTP layer and a WDP layer, and an interworking function (IWF) unit having a CSD protocol layer connected to the CSD protocol layers of each WAP terminal, and a TCP layer and an IP layer which are connected to the TCP and IP layers of each WAP server, for communications between each WAP terminal and each WAP server, the method comprising the steps of: (a) transferring an Origination Message for a call connection from each WAP terminal to the IWF unit, and transferring an Origination ACK from the IWF unit to the corresponding WAP terminal in response to the Origination Message; (b) receiving WAP data which is service request data for the WAP servers from the WAP terminals, to map each WAP terminal to the corresponding WAP server in the IWF unit, and transferring the received WAP data through the Internet to the corresponding WAP server; (c) receiving the WAP data to generate WAP server data according to the received WAP data in each WAP server, and transferring the WAP server data through the Internet to the IWF unit; (d) receiving the WAP server data transferred in the step (c) to map the WAP servers to the corresponding WAP terminals in the IWF unit, and transferring the received WAP server data to the corresponding WAP terminals; and (e) communicating in the WAP terminals with the IWF unit through a single Internet Protocol/Peer-to-Peer. Protocol (IP/PPP) layer contained in each Circuit Switch Data service (CSD) protocol layer of the WAP terminals.

According to a third aspect of the invention, there is provided a communication method in a data communications system including a plurality of WAP terminals each having a protocol stack in which a Circuit Switch Data service (CSD) protocol layer is laid under a Wireless Transaction Protocol (WTP) layer and a Wireless Datagram Protocol (WDP) layer, a non-WAP terminal for generating a common circuit data, a plurality of WAP servers each having a protocol stack in which at least a Transmission Control Protocol (TCP) layer and an Internet Protocol (IP) layer are laid under a WTP layer and a WDP layer, an Internet server for providing the non-WAP terminal with Internet server data according to the common circuit data, an Internet service provider (ISP) having a public switched telephone network (PSTN) circuit layer, for transferring the common circuit data received through a PSTN from the non-WAP terminal to the Internet server, an interworking function (IWF) unit having a CSD protocol layer connected to the CSD protocol layers of each WAP terminal, and a TCP layer and an IP layer which are connected to the TCP and IP layers of each WAP server, for data communications between each WAP terminal and each WAP server, the method comprising the steps of: (a) preliminary step of determining whether data input to the IWF unit is WAP data or the common circuit data; (b) transferring the WAP data through the Internet to the corresponding WAP server if the input data is determined to be the WAP data in the step (a) and transferring the common circuit data through the ISP to the Internet server if the input data is determined to be the common circuit data in the step (b); (c) determining whether the data input to the IWF unit is WAP server data or the Internet server data; and (d) transferring the WAP server data through the Internet to the corresponding WAP terminal if the input data is determined to be the WAP server data in the step (c), and transferring the Internet server data through the PSTN to the non-WAP terminal if the input data is determined to be the Internet server data in the step (c), wherein each WAP terminal communicates with the IWF unit through a single Internet Protocol/Peer-to-Peer Protocol (IP/PPP) layer included in its own CSD protocol layer.

For a better understanding of the invention, and to show how embodiments of the same may be carried into effect, reference will now be made, by way of example, to the accompanying diagrammatic drawings, in which:
Figure 1 is a block diagram of a conventional device for data communications between a Wireless Application Protocol (WAP) terminal and a WAP server;
Figure 2 shows protocol stacks of each block of the conventional data communications device;
Figure 3 is a detailed view of the Circuit Switch Data service protocol (CSD(IS-707) shown in Figure 2;
Figure 4 is a diagram illustrating data flow in the data communications device shown in Figure 1;
Figure 5 is a block diagram of a device for data communications between a WAP terminal and a WAP server according to a preferred embodiment of the present invention;
Figure 6 shows protocol stacks of each block of the data communications device shown in Figure 5;
Figure 7 is a diagram illustrating data flow in the data communications device shown in Figure 5;
Figure 8 is a block diagram of a device for data communications between a WAP terminal and a WAP server according to another preferred embodiment of the present invention; and
Figure 9 is a flowchart illustrating a communication method of the data communications device shown in Figure 8.

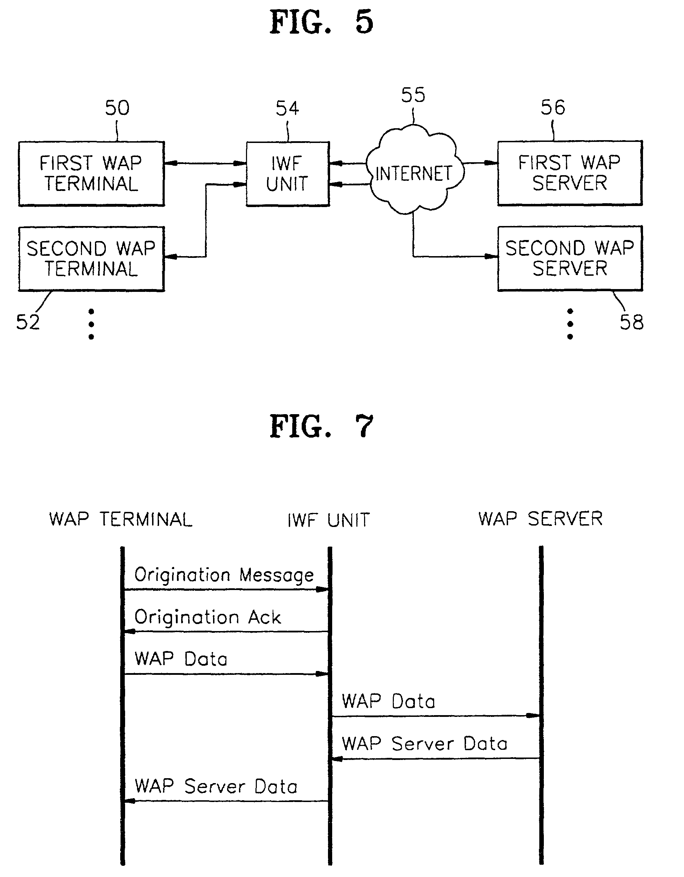

Referring to Figure 5 showing a device for data communications between a Wireless Application Protocol (WAP) terminal and a WAP server according to a first embodiment of the present invention, the device comprises a plurality of WAP terminals 50, 52, ..., and an interworking function (IWF) unit 54, the Internet 55 and a plurality of WAP servers 58, 60, ...

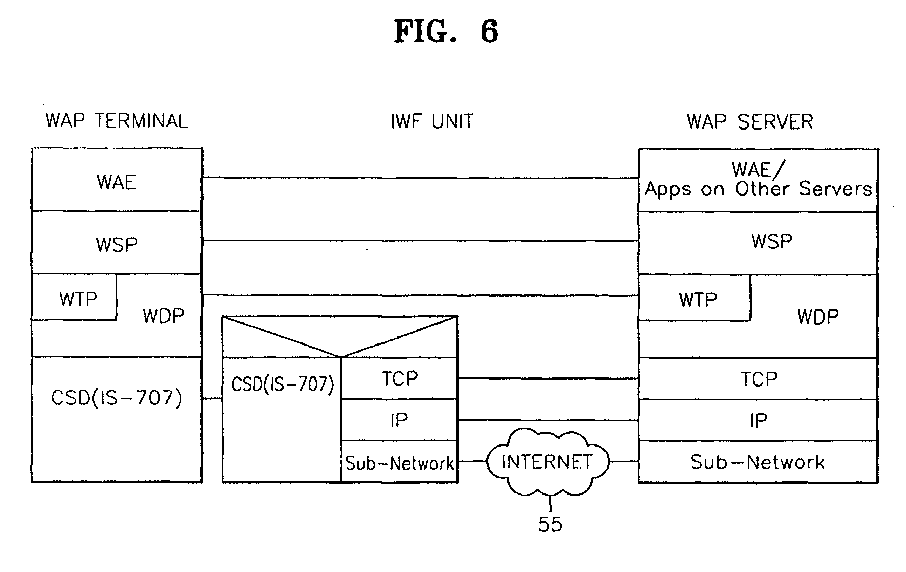

Each WAP terminal 50, 52, ... has a protocol stack in which a Circuit Switch Data services protocol (CSD) layer is situated below a Wireless Session Protocol (WSP) layer and a Wireless Datagram Protocol (WDP) layer, and generates WAP data which is data requesting data service from each WAP server 58, 60, ... Figure 6 shows a protocol stack of one of the WAP terminals 50, 52, .... The protocol stack of Figure 6 is different from that of the conventional WAP terminal of Figure 2 in that only a CSD(IS-707) layer exists below the WTP and WDP layers by omitting the IP and PPP layers. That is, because the CSD(IS-707) layer itself includes the IP and PPP layers as described with reference to Figure 3, the WAP terminal according to the present invention utilizes the IP and PPP layers of the CSD(IS-707), without having IP and PPP layers therein, such that there is no redundant IP and PPP layers unlike the conventional protocol stack. Each WAP terminal 50, 52, ... has a unique identification number or source IP address.

Each WAP server 58, 60, ... has a protocol stack in which a CSD layer exists below a WTP layer and a WDP layer, and a Transmission Control Protocol (TCP) layer and an IP layer exist, and provides the WAP terminals 50, 52, ... with WAP server data according to the WAP data provided. As shown in Figure 6, a protocol stack of each WAP server 58, 60, ... has a corresponding structure for each WAP terminal 50, 52, ... The WAP server of Figure 6 is different from the conventional WAP server in that it comprises the TCP layer which is not shown in the conventional WAP server. Each WAP server 56, 58, ... has an identification number or a destination IP address for each source IP address of the WAP terminals 50, 52, ...

The IWF unit 54 comprises a CSD protocol layer connected to each CSD protocol layer of the WAP terminals, and TCP and IP layers each connected to the TCP and IP layers of each WAP server, to map the WAP terminals 50, 52, ... to the corresponding WAP servers 56, 58, ... Here, the identification number of a specific WAP terminal may be mapped to a destination IP address of the corresponding WAP server, or a source IP address of the WAP terminal is mapped to a specific mapping table value. To this end, the IWF unit 54 has a mapping table (not shown) used for connecting the identification number of a specific WAP terminal to a WAP server. The IWF unit 54 also includes another mapping table (not shown) which is used for finding the corresponding WAP terminal during reception of data from a WAP server. The IWF unit 54 and the WAP servers 56, 58, ... are connected through the Internet 55.

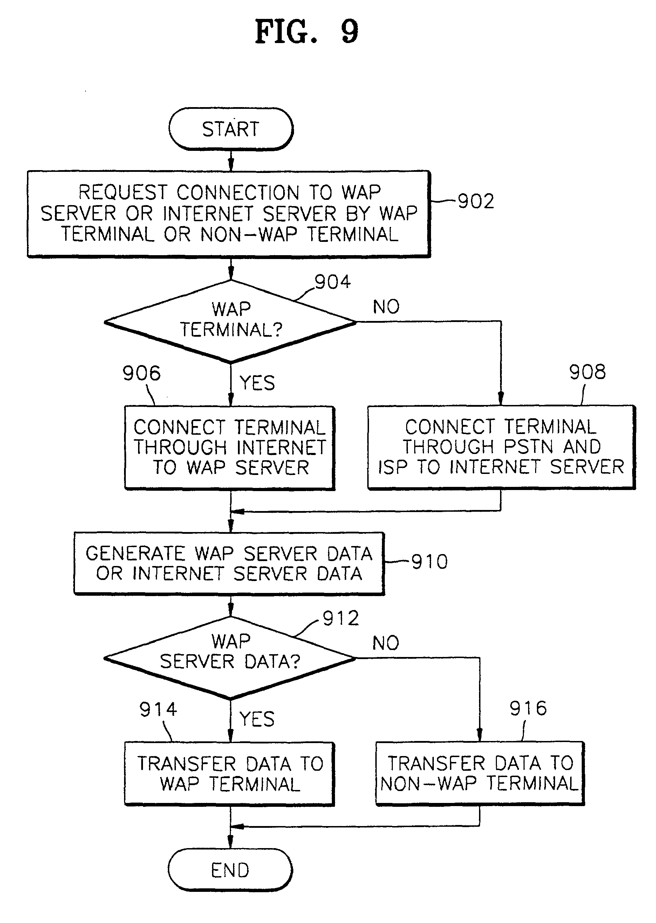

Figure 7 is a diagram illustrating data flow in the data communications device shown in Figure 5.

When the WAP terminals 50, 52, ... send an Origination Message for a call connection thereof to the IWF unit 12, the IWF unit 12 receives the Origination message and then sends an Origination Ack message as a confirmation of the reception to the WAP terminals 50, 52, ... When the WAP terminals 50, 52, ... receives the Origination Ack message, the WAP terminals 50, 52, ... being connected to the corresponding WAP servers 58, 60, ..., the WAP terminals 50, 52, ... send a WAP data which is service request data through the Internet 55 to the WAP servers 58, 60, ... After receiving the WAP data, the WAP servers 58, 60,... send WAP server data which they retain, or data transferred from an Internet server (not shown) through the Internet 55 and the IWF unit 54 to the WAP terminals 50, 52, ... That is, the WAP terminals 50, 52, ... are directly connected to the WAP servers without going through an Internet service provider (ISP) using a public switched telephone network (PSTN).

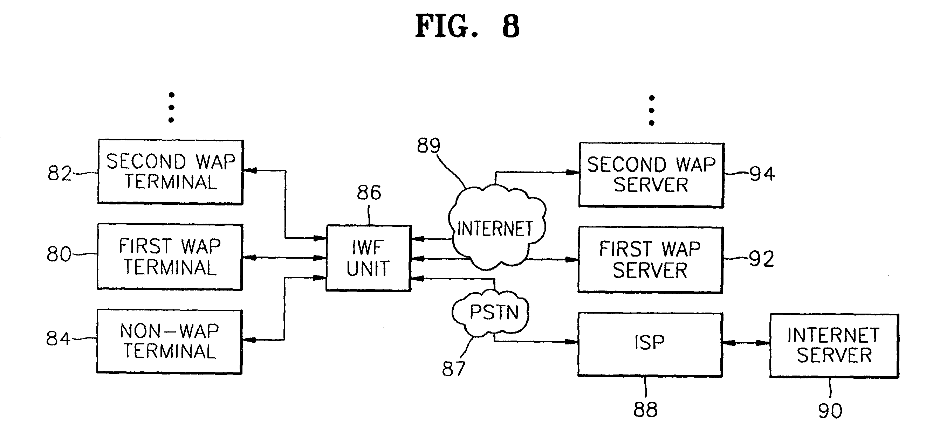

Figure 8 is a block diagram of a data connection device for communications between a WAP terminal and a WAP server according to another embodiment of the present invention.

The data connection device of Figure 8 comprises WAP terminals 80, 82, ..., a non-WAP terminal 84, an IWF unit 86, a PSTN 87, an ISP 88, the Internet 89, an Internet server 90, and WAP servers 92, 94, ...

Each WAP terminal 80, 82, ... has a protocol stack in which a CSD protocol layer resides below WTP and WDP layers, and generates WAP data for requesting data service to the WAP servers 92, 94,... Each WAP terminal 80, 82, ... has a unique identification number or source IP address.

The non-WAP terminal 84 generates a common circuit data.

Each WAP server 92, 94, ... has a protocol stack in which TCP and IP layers are situated below WTP and WDP layers, and provides the WAP terminals 80, 82, ... with WAP server data according to the WAP data. Each WAP server 92, 94, ... has an identification number or a destination IP address corresponding to each source IP address of the WAP terminals 80, 82, ...

The ISP 88 includes a PSTN circuit layer connected to a PSTN circuit layer of the IWF unit 86 to be described later, receives the common circuit data of the non-WAP terminal 82 through the PSTN 87 and transfers the received data to the Internet server 90. The ISP 88 is one of companies providing general communication services to a common carrier.

The Internet server 90 provides the non-WAP terminal 84 with Internet server data in response to the common circuit data.

The IWF unit 86 includes a CSD protocol layer, TCP and IP layers and a PSTN circuit layer, and acts as interfaces between the WAP terminals 80, 82, ... and WAP servers 92, 94, ..., and between the non-WAP terminal 84 and the ISP 88. The IWF unit 86 is connected through the Internet 89 to the WAP servers 92, 94, ..., and the IWF unit 86 and the ISP 87 are connected to each other through the PSTN 87. The CSD protocol layer is connected to each CSD protocol layer of the WAP terminals 80, 82, ..., and the TCP and IP layers are connected respectively to the TCP and IP layers of each of the WAP servers 92, 94, .... Also, the PSTN circuit layer is connected through the PSTN 87 to the PSTN circuit layer of the ISP 88. In detail, when an input data is the WAP data or the WAP server data, interfacing is performed such that an identification number of the WAP terminal is mapped to a destination IP address of the WAP server, or a source IP address of the WAP terminal is mapped to a specific mapping table value. Meanwhile, when an input data is the common circuit data or the Internet server data, interfacing between the non-WAP terminal 82 and the ISP 86 is performed.

Figure 9 is a flowchart illustrating a data communication method between a WAP terminal and a WAP server according to another embodiment of the present invention.

One of the WAP terminals 80, 82, ... or the non-WAP terminal 84 requests connection to one of the WAP servers 92, 94, ... or the Internet server 90 (step 902). That is, one WAP terminal or the non-WAP terminal 84 generates a WAP data or common circuit data, respectively, and transfers the data to the IWF unit 86.

The IWF unit 86 determines whether or not the terminal that needs to be connected in step 902 is a WAP terminal, based on the WAP data or the common circuit data (step 904)

If the connection request terminal is a WAP terminal, the WAP terminal is connected through the Internet 89 to the WAP server (step 906). Meanwhile, if the connection request terminal is not a WAP terminal but a non-WAP terminal, the non-WAP terminal is connected through the PSTN 87 to the ISP 88, and then to the Internet server 90 (step 908).

The WAP server 92 and the Internet server 90 generate WAP server data and Internet server data, respectively, and transfer respective data through the Internet 89, or the ISP 88 and the PSTN 87 to the IWF unit 86.

The IWF unit 86 determines whether or not the input data is WAP server data (step 912).

When the input data is from a WAP server, the data is transferred to the WAP terminal. Meanwhile, when the input data is Internet server data, the data is transferred to the non-WAP terminal 84.

The invention may be embodied in a general purpose digital computer that is running a program from a computer usable medium, including but not limited to storage media such as magnetic storage media (e.g., ROM's, floppy disks, hard disks, etc.), optically readable media (e.g., CD-ROMs, DVDs, etc.) and carrier waves (e.g., transmissions over the Internet).

Hence, the present invention may be embodied as a computer usable medium having a computer readable program code unit embodied therein for communications between a WAP terminal and a WAP server of a data communications device including a plurality of WAP terminals having a protocol stack in which a CSD protocol layer is laid under a WTP layer and a WDP layer, a plurality of WAP servers having a protocol stack in which a TCP layer and an IP layer are laid under a WTP layer and a WDP layer, and an IWF unit having a CSD protocol layer connected to the CSD protocol layers of each WAP terminal, and a TCP layer and an IP layer which are connected to the TCP and IP layers of each WAP server, wherein each WAP terminal communicates through a single IP/PPP protocol layer included in its own CSD protocol layer to the IWF unit, the computer readable program code means in the computer usable medium comprising: computer readable program code means for causing a computer to effect transferring an Origination Message for a call connection from each WAP terminal to the IWF unit, and transferring an Origination ACK from the IWF unit to the corresponding WAP terminal in response to the Origination Message; computer readable program code means for causing a computer to effect receiving WAP data which is service request data for the WAP servers from the WAP terminals, to map each WAP terminal to the corresponding WAP server in the IWF unit, and transferring the received WAP data through the Internet to the corresponding WAP server; computer readable program code means for causing a computer to effect receiving the WAP data to generate WAP server data according to the received WAP data in each WAP server, and transferring the WAP server data through the Internet to the IWF unit; computer readable program code means for causing a computer to effect receiving the WAP server data transferred in the step (c) to map the WAP servers to the corresponding WAP terminal in the IWF unit, and transferring the received WAP server data to the corresponding WAP terminals; and computer readable program code means for causing a computer to effect communicating in the WAP terminals with the IWP unit through a single Internet Protocol/Peer-to-Peer Protocol (IP/PPP) layer contained in each Circuit Switch Data service (CSD) protocol layer of the WAP terminals, for instance.

Also, the present invention may be embodied as a computer usable medium having a computer readable program code unit embodied therein for communications transferred between a WAP terminal and a WAP server of a data communications device including a plurality of WAP terminals each having a protocol stack in which a CSD protocol layer is laid under a Wireless Transaction Protocol (WTP) layer and a WDP layer, a non-WAP terminal for generating a common circuit data, a plurality of WAP servers each having a protocol stack in which at least a TCP layer and an IP layer are laid under a WTP layer and a WDP layer, an Internet server for providing the non-WAP terminal with Internet server data according to the common circuit data, an ISP having a PSTN circuit layer, for transferring the common circuit data received through a PSTN from the non-WAP terminal, to the Internet server, an IWF unit having a CSD protocol layer connected to the CSD protocol layers of each WAP terminal, and a TCP layer and an IP layer which are connected to the TCP and IP layers of each WAP server, wherein each WAP terminal communicates through a single IP/PPP protocol layer included in its own CSD protocol layer to the IWF unit, the computer readable program code means in the computer usable medium comprising: computer readable program code means for causing a computer to effect determining whether data input to the IWF unit is WAP data or the common circuit data; computer readable program code means for causing a computer to effect transferring the WAP data through the Internet to the corresponding WAP server if the input data is determined as the WAP data and transferring the common circuit data through the ISP to the Internet server if the input data is determined to be the common circuit data; computer readable program code means for causing a computer to effect determining whether the data input to the IWF unit (??from) is WAP server data or the Internet server data; and computer readable program code means for causing a computer to effect transferring the WAP server data through the Internet to the corresponding to the WAP terminal if the input data is determined to be the WAP server data, and transferring the Internet server data through the PSTN to the non-WAP terminal if the input data is determined to be the Internet server data, for instance.

A functional program, code and code segments, used to implement the present invention can be derived by a skilled computer programmer from the description of the invention contained herein.

While the present invention has been illustrated and described with reference to specific embodiments, further modifications and alterations within the scope of this invention as defined by the appended claims will occur to those skilled in the art.

As described above, the data communications device according to embodiments of the present invention adopts a protocol stack in which only a single IP/PPP protocol layer resides in the WAP terminals and the IWF unit functions as an ISP, providing the following effects. First, because there is no redundancy of IP/PPP protocol layers in the WAP terminal, overhead is considerably reduced compared to the conventional data transmission. Second, the IWF unit is directly connected through the Internet to the WAP server, not through the PSTN and the ISP, so that connection time and costs can be reduced. Third, the data flow procedure is also simplified compared to the conventional data communications device and method thereof.

## Claims

1. A system for data communications between a Wireless Application Protocol, WAP, terminal and a WAP server, comprising:
a plurality of WAP terminals (50, 52; 80, 82) each having a protocol stack in which a Circuit Switch Data service (CSD) protocol layer is laid under a Wireless Transaction Protocol, WTP, layer and a Wireless Datagram Protocol, WDP, layer, for generating WAP data which is service request data;
a plurality of WAP servers (56, 58; 92, 94) each having a protocol stack in which a Transmission Control Protocol, TCP, layer and an Internet Protocol, IP, layer are laid under a WTP layer and a WDP layer, for providing the WAP terminals (50, 52; 80, 82) with WAP server data according to the WAP data; and
an interworking function, IWF, unit (54; 86) having a CSD protocol layer connected to the CSD protocol layers of each WAP terminal (50, 52; 80, 82), and a TCP layer and an IP layer which are connected to the TCP and IP layers of each WAP server (56, 58; 92, 94),
**characterised in that** each WAP terminal (50, 52; 80, 82) communicates with the IWF unit (54; 86) though a single Internet Protocol/Peer-to-Peer Protocol, IP/PPP, layer included in its own CSD protocol layer, and the IWF unit (54; 86) communicates through the Internet with each WAP server.

2. The system of claim 1, wherein the IWF unit (54; 86) includes a mapping table used for mapping each WAP terminal (50, 52; 80, 82) to the corresponding WAP server (56, 58; 92, 94),
wherein identification numbers of each WAP terminal (50, 52; 80, 82) and destination IP addresses of each WAP server (56, 58; 92, 94) are mapped to each other, or source IP addresses of each WAP terminal (50, 52; 80, 82) are mapped to the corresponding mapping table values.

3. A system according to claim 1 or 2, further comprising:
a non-WAP terminal (84) for generating a common circuit data;
an Internet server (90) for providing the non-WAP terminal (84) with Internet server data according to the common circuit data; and
an Internet service provider, ISP, (88) having a public switched telephone network, PSTN, circuit layer, for transferring the common circuit data received through a PSTN from the non-WAP terminal (84), to the Internet server (90); and
wherein the interworking function, IWF, unit (86) is arranged for performing interfacing between each WAP terminal (80, 82) and each WAP server (92, 94), and the non-WAP terminal (84) and the ISP (88).

4. A communication method in a data communications system including a plurality of WAP terminals (50, 52; 80, 82) having a protocol stack in which a Circuit Switch Data service, CSD, protocol layer is laid under a Wireless Transaction Protocol, WTP, layer and a Wireless Datagram Protocol, WDP, layer, a plurality of WAP servers (56, 58; 92, 94) having a protocol stack in which a Transmission Control Protocol, TCP, layer and an Internet Protocol, IP, layer are laid under a WTP layer and a WDP layer, and an interworking function, IWF, unit (54; 86) having a CSD protocol layer connected to the CSD protocol layers of each WAP terminal (50, 52; 80, 82), and a TCP layer and an IP layer which are connected to the TCP and IP layers of each WAP server (56, 58; 92, 94), for communications between each WAP terminal (50, 52; 80, 82) and each WAP server (56, 58; 92, 94), the method comprising the steps of:
(a) transferring an Origination Message for a call connection from each WAP terminal (50, 52; 80, 82) to the IWF unit (54; 86), and transferring an Origination ACK from the IWF unit (54; 86) to the corresponding WAP terminal (50, 52; 80, 82) in response to the Origination Message;
(b) receiving WAP data which is service request data for the WAP servers (56, 58; 92, 94) from the WAP terminals (50, 52; 80, 82), to map each WAP terminal (50, 52; 80, 82) to the corresponding WAP server (56, 58, 92, 94) in the IWF unit (54; 86), and transferring the received WAP data through the Internet to the corresponding WAP server (56, 58; 92, 94);
(c) receiving the WAP data to generate WAP server data according to the received WAP data in each WAP server (56, 58; 92, 94), and transferring the WAP server data through the Internet to the IWF unit (54; 86);
(d) receiving the WAP server data transferred in the step (c) to map the WAP servers (56, 58; 92, 94) to the corresponding WAP terminals (50, 52; 80, 82) in the IWF unit (54; 86), and transferring the received WAP server data to the corresponding WAP terminals (50, 52; 80, 82); and
**characterised by**
(e) communicating in the WAP terminals (50, 52; 80, 82) with the IWF unit (54; 86) through a single Internet Protocol/Peer-to-Peer Protocol, IP/PPP, layer contained in each Circuit Switch Data service, CSD, protocol layer of the WAP terminals (50, 52; 80, 82).

5. A communication method in a data communications system including a plurality of WAP terminals (80, 82) each having a protocol stack in which a Circuit Switch Data service, CSD, protocol layer is laid under a Wireless Transaction Protocol, WTP, layer and a Wireless Datagram Protocol, WDP, layer, a non-WAP terminal (84) for generating a common circuit data, a plurality of WAP servers (92, 94) each having a protocol stack in which at least a Transmission Control Protocol, TCP, layer and an Internet Protocol, IP, layer are laid under a WTP layer and a WDP layer, an Internet server (90) for providing the non-WAP terminal (84) with Internet server data according to the common circuit data, an Internet service provider, ISP, (88) having a public switched telephone network, PSTN, circuit layer, for transferring the common circuit, data received through a PSTN from the non-WAP terminal (84) to the Internet server (90), an interworking function, IWF, unit (86) having a CSD protocol layer connected to the CSD protocol layers of each WAP terminal (80, 82), and a TCP layer and an IP layer which are connected to the TCP and IP layers of each WAP server (92, 94), for data communications between each WAP terminal (80, 82) and each WAP server (92, 94), the method comprising the steps of:
(a) preliminary step of determining whether data input to the IWF unit (86) is WAP data or the common circuit data;
(b) transferring the WAP data through the Internet to the corresponding WAP server (92, 94) if the input data is determined to be the WAP data in the step (a) and transferring the common circuit data through the ISP (88) to the Internet server (90) if the input data is determined to be the common circuit data in the step (b);
(c) determining whether the data input to the IWF unit is WAP server data or the Internet server data; and
(d) transferring the WAP server data through the Internet to the corresponding WAP terminal (80, 82) if the input data is determined to be the WAP server (92, 94) data in the step (c), and transferring the Internet server data through the PSTN to the non-WAP terminal (84) if the input data is determined to be the Internet server data in the step (c),
**characterised in that** each WAP terminal (80, 82) communicates with the IWF unit (86) through a single Internet Protocol/Peer-to-Peer Protocol, IP/PPP, layer included in its own CSD protocol layer.

## Patentansprüche

1. System zur Datenkommunikation zwischen einem Drahtos-Anwendungs-Protokoll- ,WAP, Endgerät und einem WAP-Server, das umfasst:
eine Vielzahl von WAP-Endgeräten (50, 52; 80, 82) mit je einem Protokollstapel, in dem eine Wählbetriebs-Datenservice- ,CSD, Protokollschicht unter eine Drahtlos-Transaktions-Protokoll- ,WTP, Schicht und eine Drahtlos-Datagramm-Protokoll- ,WDP, Schicht gelegt ist, zum Erzeugen von WAP-Daten, die Service-Anforderungsdaten sind;
eine Vielzahl Von WAP-Servern (56, 58; 92, 94) mit je einem Protokollstapel, in dem eine Übertragungs-Steuerprotokoll- ,TCP, Schicht und eine Internet-Protokoll-,IP, Schicht unter eine WTP-Schicht und eine WDP-Schicht gelegt sind, zum Versorgen der WAP-Endgeräte (50, 52; 80, 82) mit WAP-Serverdaten entsprechend den WAP-Daten, und
eine Zusammenarbeits-Funktions- ,IWF, Einheit (54; 86) mit einer CSD-Protokollschicht, die mit den CSD-Protokollschichten jedes WAP-Endgerätes (50, 52; 80, 82) verbunden ist, und einer TCP-Schicht und einer IP-Schicht, die mit den TCP- und IP-Schichten jedes WAP-Servers (56, 58; 92, 94) verbunden sind,
**dadurch gekennzeichnet, dass** jedes WAP-Endgerät (50, 52; 80, 82) mit der IWF-Einheit (54; 86) durch eine einzige Internet-Protokoll/Peer-zu-Peer-Protokoll-,IP/PPPP, Schicht, die in seiner eigenen CSD-Schicht enthalten ist, kommuniziert, und die IWF-Einheit (54; 86) durch das Internet mit jedem WAP-Server kommuniziert

2. System nach Anspruch 1, wobei die IWF-Einheit (54; 86) eine Zuordnungstabelle umfasst, die benutzt wird, um jedes WAP-Endgerät (50, 52; 80,82) dem entsprechenden WAP-Server (56, 58; 92, 94) zuzuordnen,
wobei Identifikationsnummern jedes WAP-Endgerätes (50, 52; 80, 82) und Ziel-IP-Adressen jedes WAP-Servers (56, 58; 92, 94) einander zugeordnet werden, oder Quellen-IP-Adressen jedes WAP-Endgerätes (50, 52; 80, 82) den entsprechenden Zuordnungstabellenwerten zugeordnet werden.

3. System nach Anspruch 1 oder 2, das weiter umfasst:
ein Nicht-WAP-Endgerät (84) zum Erzeugen von gemeinsamen Stromkreisdaten;
einen Internet-Server (90) zum Versorgen des Nicht-WAP-Endgerätes (84) mit Internet-Serverdaten entsprechend den gemeinsamen Stromkreisdaten, und
einen Internet-Serviceprovider , ISP, (88) mit einer Telefonwählnetz- ,PSTN, Stromkreisschicht zum Übertragen der durch ein PSTN von dem Nicht-WAP-Endgerät (84) empfangenen gemeinsamen Stromkreisdaten an den Internet-Server (90), und
wobei die Zusammenarbeits-Funktions- , IWF, Einheit (86) eingerichtet ist, eine Schnittstellenverbindung zwischen jedem WAP-Endgerät (80, 92) und jedem WAP-Server (92, 94) und dem Nicht-WAP-Endgerät (84) dem ISP (88) herzustellen.

4. Kommunikationsverfahren in einem Datenkommunikationssystem, das eine Vielzahl von WAP-Endgeräten (50, 52; 80, 82) mit einem Protokollstapel, in dem eine Wählbetriebs-Datenservice- ,CSD, Protokollschicht unter eine Drahtlos-Transaktions-Protokoll-,WTP, Schicht und eine Drahtlos-Datagramm-Protokoll- ,WDP, Schicht gelegt ist, eine Vielzahl von WAP-Servern (56, 58; 92, 94) mit einem Protokollstapel, in dem eine Übertragungs-Steuerprotokoll- TCP, Schicht und eine Internet-Protokoll- ,IP, Schicht unter eine WTP-Schicht und eine WDP-Schicht gelegt sind, und eine Zusammenarbeits-Funktions- ,IWF, Einheit (54; 86) mit einer CSD-Protokollschicht, die mit den CSD-Protokollschichten jedes WAP-Endgerätes (50, 52; 80, 82) verbunden ist, und einer TCP-Schicht und einer IP-Schicht, die mit den TCP- und IP-Schichten jedes WAP-Servers (56, 58; 92, 94) verbunden sind, zur Kommunikationen zwischen jedem WAP-Endgerät (50, 52; 80, 82) und jedem WAP-Server (56, 58; 92, 94) umfasst, wobei das Verfahren die folgenden Schritte umfasst:
(a) Übertragen einer Herkunftsnachricht für eine Anrufverbindung von jedem WAP-Endgerät (50, 52; 80, 82) an die IWF-Einheit (54; 86) und Übertragen einer Herkunftsbestätigung von der IWF-Einheit (54; 86) an das entsprechende WAP-Endgerät (50, 52; 80, 82) als Reaktion auf die Herkunftsnachricht;
(b) Empfangen von WAP-Daten, die Serviceanforderungsdaten für die WAP-Server (56, 58; 92, 94) sind, von den WAP-Endgeräten (50, 52; 80, 82) um jedes WAP-Endgerät (50, 52; 80, 82) dem entsprechenden WAP-Server (56, 58; 92, 94) in der IWF-Einheit (54; 86) zuzuordnen, und Übertragen der empfangenen WAP-Daten durch das Internet an den entsprechenden WAP-Server (56, 58; 92, 94);
(c) Empfangen der WAP-Daten, um WAP-Serverdaten entsprechend den empfangenen WAP-Daten in jedem WAP-Server (56, 58; 92, 94) zu erzeugen, und Übertragen der WAP-Serverdaten durch das Internet an die IWF-Einheit (54; 86);
(d) Empfangen der in dem Schritt (c) übertragenen Serverdaten, um die WAP-Server (56, 58; 92, 94) den entsprechenden WAP-Endgeräten (50, 52; 80, 82) in der IWF-Einheit (54, 86) zuzuordnen, und Übertragen der empfangenen WAP-Serverdaten an die entsprechenden WAP-Endgeräte (50, 52; 80, 82), und
(e) Kommunizieren in den WAP-Endgeräten (50, 52; 80, 82) mit der IWF-Einheit (54; 86) durch eine einzige Internet-Protokoll/Peer-zu-Peer-Protokoll-,IP/PPP, Schicht, die in jeder Wählbetriebs-Datenservice-,CSD, Protokollschicht der WAP-Endgeräte (50, 52; 80, 82) enthalten ist.

5. Kommunikationsverfahren in einem Datenkommunikationssystem, das eine Vielzahl von WAP-Endgeräten (80, 82) mit je einem Protokollstapel, in dem eine Wählbetriebs-Datenservice- ,CSD, Protokollschicht unter eine Drahtlos-Transaktions-Protokoll- ,WTP, Schicht und eine Drahtlos-Datagramm-Protokoll- ,WDP, Schicht gelegt ist, ein Nicht-WAP-Endgerät (84) zum Erzeugen von gemeinsamen Stromkreisdaten, eine Vielzahl von WAP-Servern (92, 94) mit je einem Protokollstapel, in dem wenigstens eine Übertragungs-Steuerprotokoll- ,TCP, Schicht und eine Internet-Protokoll-,IP, Schicht unter eine WTP-Schicht und eine WDP-Schicht gelegt sind, einen Internet-Server (90) zum Versorgen des Nicht-WAP-Endgerätes (84) mit Internet-Serverdaten entsprechend den gemeinsamen Stromkreisdaten, einen Internet-Serviceprovider ,ISP, (88) mit einer Telefonwählnetz- ,PSTN, Stromkreisschicht zum Übertragen der durch ein PSTN von dem Nicht-WAP-Endgerät (84) empfangenen Stromkreisdaten an den Internet-Server (90), eine Zusammenarbeits-Funktions- (IWF) Einheit (86) mit einer CSD-Protokollschicht, die mit den CSD-Protokollschichten jedes WAP-Endgerätes (80, 82) verbunden ist, und einer TCP-Schicht und einer IP-Schicht, die mit den TCP- und IP-Schichten jedes WAP-Servers (92, 94) verbunden sind, zur Datenkommunikation zwischen jedem WAP-Endgerät (80, 82) und jedem WAP-Server (92, 94) umfasst, wobei das Verfahren die folgenden Schritte umfasst:
(a) Einleitungsschritt um festzustellen, ob in die IWF-Einheit (86) eingegebene Daten WAP-Daten oder die gemeinsamen Stromkreisdaten sind;
(b) Übertragen der WAP-Daten durch das Internet an den entsprechenden WAP-Server (92, 94), wenn festgestellt wird, dass in dem Schritt (a) die eingegebenen Daten die WAP-Daten sind, und Übertragen der gemeinsamen Stromkreisdaten durch den ISP (88) an den Internet-Server (90), wenn festgestellt wird, dass in dem Schritt (a) die eingegebenen Daten die gemeinsamen Stromkreisdaten sind;
(c) Feststellen, ob die in die IWF-Einheit eingegebenen Daten WAP-Serverdaten oder die Internet-Serverdaten sind, und
(d) Übertragen der WAP-Serverdaten durch das Internet an das entsprechende WAP-Endgerät (80, 82), wenn in dem Schritt (c) festgestellt wird, dass die eingegebenen Daten die WAP-Server- (92, 94) Daten sind, und Übertragen der Internet-Serverdaten über das PSTN an das Nicht-WAP-Endgerät (84), wenn in dem Schritt (c) festgestellt wird, dass die eingegebenen Daten die Internet-Serverdaten sind,
**dadurch gekennzeichnet, dass** jedes WAP-Endgerät (80, 82) mit der IWF-Einheit (86) durch eine einzige in seiner eigenen CSD-Protokollschicht enthaltene internet-Protokoll/Peer-zu-Peer-Protokoll- ,IP/PPP, Schicht kommuniziert.

## Revendications

1. Système pour des communications de données entre un terminal de Protocole d'Application Sans Fil WAP, et un serveur WAP, comportant :
une pluralité de terminaux WAP (50, 52 ; 80, 82), chacun ayant une pile de protocoles dans laquelle une couche de protocole de service de Données de Commutation de Circuit, CSD, repose sous une couche de Protocole de Transaction Sans Fil, WTP, et une couche de Protocole de Datagramme Sans Fil, WDP, pour générer des données WAP qui sont des données de demande de service,
une pluralité de serveurs WAP (56, 58 ; 92, 94) chacun ayant une pile de protocoles dans laquelle une couche de Protocole de Commande de Transmission, TCP, et une couche de Protocole Internet, IP, reposent sous une couche WTP et une couche WDP, pour délivrer des données de serveur WAP aux terminaux WAP (50, 52 ; 80, 82) conformément aux données WAP, et
une unité fonctionnelle d'inter-fonctionnement, IWF, (54 ; 86) ayant une couche de protocole CSD connectée aux couches de protocole CSD de chaque terminal WAP (50, 52 ; 80, 82), et une couche TCP et une couche IP qui sont connectées aux couches TCP et IP de chaque serveur WAP (56, 58 ; 92, 94),
**caractérisé en ce que** chaque terminal WAP (50, 52 ; 80, 82) communique avec l'unité IWF (54 ; 86) via une couche unique de Protocole Internet/Protocole Point à Point, IP/PPP, comprise dans sa propre couche de protocole CSD, et l'unité IWF (54 ; 86) communique via l'Internet avec chaque serveur WAP.

2. Système selon la revendication 1, dans lequel l'unité IWF (54 ; 86) inclut une table de mappage pour mettre en correspondance chaque terminal WAP (50, 52 ; 80, 82) avec le serveur WAP (56, 58 ; 92, 94) correspondant,
dans lequel des numéros d'identification de chaque terminal WAP (50, 52 ; 80, 82) et des adresses IP de destination de chaque serveur WAP (56, 58 ; 92, 94) sont mis en correspondance les uns avec les autres, ou des adresses IP source de chaque terminal WAP (50, 52 ; 80, 82) sont mises en correspondance avec les valeurs correspondantes de la table de mappage.

3. Système selon la revendication 1 ou 2, comportant en outre :
un terminal non-WAP (84) pour générer des données de circuit communes,
un serveur Internet (90) pour délivrer des données de serveur Internet au terminal non-WAP (84) conformément aux données de circuit communes, et
un fournisseur de services Internet, ISP, (88) ayant une couche de circuit de réseau téléphonique public commuté, PSTN, pour transférer les données de circuit communes reçues via un réseau PSTN du terminal non-WAP (84) vers le serveur Internet (90), et
dans lequel l'unité fonctionnelle d'inter-fonctionnement, IWF, (86) est conçue pour assurer l'interface entre chaque terminal WAP (80, 82) et chaque serveur WAP (92, 94), et le terminal non-WAP (84) et le fournisseur ISP (88).

4. Procédé de communication dans un système de communication de données comportant une pluralité de terminaux WAP (50, 52 ; 80, 82) ayant une pile de protocoles dans laquelle une couche de protocole de service de Données de Commutation de Circuit, CSD, repose sous une couche de Protocole de Transaction Sans Fil, WTP, et une couche de Protocole de Datagramme Sans Fil, WDP, une pluralité de serveurs WAP (56, 58 ; 92, 94) ayant une pile de protocoles dans laquelle une couche de Protocole de Commande de Transmission, TCP, et une couche de Protocole Internet, IP, reposent sous une couche WTP et une couche WDP, et une unité fonctionnelle d'inter-fonctionnement, IWF, (54 ; 86) ayant une couche de protocole CSD connectée aux couches de protocole CSD de chaque terminal WAP (50, 52 ; 80, 82), et une couche TCP et une couche IP qui sont connectées aux couches TCP et IP de chaque serveur WAP (56, 58 ; 92, 94), pour des communications entre chaque terminal WAP (50, 52 ; 80, 82) et chaque serveur WAP (56, 58 ; 92, 94), le procédé comportant les étape consistant à :
(a) transférer un Message d'Emission pour une connexion d'appel de chaque terminal WAP (50, 52 ; 80, 82) vers l'unité IWF (54 ; 86), et transférer un accusé de réception d'Emission de l'unité IWF (54 ; 86) vers le terminal WAP (50, 52 ; 80, 82) correspondant en réponse au Message d'Emission,
(b) recevoir des données WAP qui sont des données de demande de service pour les serveurs WAP (56, 58 ; 92, 94) en provenance des terminaux WAP (50, 52 ; 80, 82), pour mettre en correspondance chaque terminal WAP (50, 52 ; 80, 82) avec le serveur WAP (56, 58 ; 92, 94) correspondant dans l'unité IWF (54 ; 86), et transférer les données WAP reçues via l'Internet vers le serveur WAP (56, 58 ; 92, 94) correspondant,
(c) recevoir les données WAP pour générer des données de serveur WAP conformément aux données WAP reçues dans chaque serveur WAP (56, 58 ; 92, 94), et transférer les données de serveur WAP via l'Internet vers l'unité IWF (54 ; 86),
(d) recevoir les données de serveur WAP transférées à l'étape (c) pour mettre en correspondance les serveurs WAP (56, 58 ; 92, 94) avec les terminaux WAP (50, 52 ; 80, 82) correspondant dans l'unité IWF (54 ; 86), et transférer les données de serveur WAP reçues vers les terminaux WAP (50, 52 ; 80, 82) correspondant, et **caractérisé par** l'étape consistant à :
(e) communiquer dans les terminaux WAP (50, 52 ; 80, 82) avec l'unité IWF (54 ; 86) via une couche unique de Protocole Internet/Protocole Point à Point, IP/PPP, contenue dans chaque couche de protocole de service de Données de Commutation de Circuit, CSD, des terminaux WAP (50, 52 ; 80, 82).

5. Procédé de communication dans un système de communications de données comportant une pluralité de terminaux WAP (80, 82), chacun ayant une pile de protocoles dans laquelle une couche de protocole de service de Données de Commutation de Circuit, CSD, repose sous une couche de Protocole de Transaction Sans Fil, WTP, et une couche de Protocole de Datagramme Sans Fil, WDP, un terminal non-WAP (84) pour générer des données de circuit communes, une pluralité de serveurs WAP (92, 94), chacun ayant une pile de protocoles dans laquelle au moins une couche de Protocole de Commande de Transmission, TCP, et une couche de Protocole Internet, IP, reposent sous une couche WTP et une couche WDP, un serveur Internet (90) pour délivrer des données de serveur Internet au terminal non-WAP (84) conformément aux données de circuit communes, un fournisseur de services Internet, ISP, (88) ayant une couche de circuit de réseau téléphonique public commuté, PSTN, pour transférer les données de circuit communes reçues via un réseau PSTN du terminal non-WAP (84) vers le serveur Internet (90), une unité fonctionnelle d'inter-fonctionnement, IWF, (86) ayant une couche de protocole CSD connectée aux couches de protocole CSD de chaque terminal WAP (80, 82), et une couche TCP et une couche IP qui sont connectées aux couches TCP et IP de chaque serveur WAP 592, 94), pour des communications de données entre chaque terminal WAP (80, 82) et chaque serveur WAP (92, 94), le procédé comportant les étapes consistant à :
(a) déterminer, dans une étape préliminaire, si des données entrées dans l'unité IWF (86) sont des données WAP ou des données de circuit communes,
(b) transférer les données WAP via l'Internet vers le serveur WAP (92, 94) correspondant si les données d'entrée sont déterminées comme étant des données WAP à l'étape (a) et transférer les données de circuit communes via le fournisseur ISP (88) vers le serveur Internet (90) si les données d'entrée sont déterminées comme étant les données de circuit communes à l'étape (b),
(c) déterminer si les données entrées dans l'unité IWF sont des données de serveur WAP ou des données de serveur Internet, et
(d) transférer les données de serveur WAP via l'Internet vers le terminal WAP (80, 82) correspondant si les données d'entrée sont déterminées comme étant les données de serveur WAP (92, 94) à l'étape (c), et transférer les données de serveur Internet via le réseau PSTN vers le terminal non-WAP (84) si les données d'entrée sont déterminées comme étant les données de serveur Internet à l'étape (c),
**Caractérisé en ce que** chaque terminal WAP (80, 82) communique avec l'unité IWF (86) via une couche unique de Protocole Internet/Protocole Point à Point, IP/PPP, incluse dans sa propre couche de protocole CSD.
